(19) Europäisches Patentamt
European Patent Office
Office européen des brevets

(11) **EP 3 482 824 A1**

(12) **EUROPÄISCHE PATENTANMELDUNG**

(43) Veröffentlichungstag:
**15.05.2019  Patentblatt 2019/20**

(21) Anmeldenummer: **17201482.1**

(22) Anmeldetag: **14.11.2017**

(51) Int Cl.:
*B01J 21/00* (2006.01)  *B01J 21/06* (2006.01)
*B01J 23/20* (2006.01)  *B01J 23/30* (2006.01)
*B01J 23/10* (2006.01)  *B01J 23/00* (2006.01)
*B01D 53/56* (2006.01)  *F01N 3/20* (2006.01)
*B01J 21/08* (2006.01)  *F01N 3/28* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **UMICORE AG & CO. KG**
**63457 Hanau-Wolfgang (DE)**

(72) Erfinder:
• **MALMBERG, Stephan**
**60389 Frankfurt (DE)**
• **QUINET, ELODIE**
**63457 Hanau (DE)**
• **SOEGER, Nicola**
**61130 Nidderau (DE)**

(54) **SCR-KATALYSATOR**

(57)  Die vorliegende Erfindung betrifft einen Katalysator, der mindestens ein Oxid des Vanadiums, mindestens ein Oxid des Wolframs, mindestens ein Oxid des Cers, mindestens ein Oxid des Titans und mindestens ein Oxid des Niobiums enthält, sowie ein diesen enthaltendes Abgassystem undund ein Verfahren zur Verminderung von Stickoxiden in Abgasen von mager betriebenen Verbrennungsmotoren. Der Katalysator kann weitere Oxide des Siliziums, des Molybdäns, des Antimons, des Zirkoniums, des Tantals und/oder des Hafniums enthalten.

Figur 1

EP 3 482 824 A1

**Beschreibung**

Die vorliegende Erfindung betrifft einen SCR-Katalysator auf Basis von Vanadiumoxid, der Niob- und Ceroxid enthält.

Das Abgas von Kraftfahrzeugen, die mit mager betriebenen Verbrennungsmotoren, beispielsweise mit Dieselmotoren, betrieben werden, enthält neben Kohlenmonoxid (CO) und Stickoxiden ($NO_x$) auch Bestandteile, die aus der unvollständigen Verbrennung des Kraftstoffs im Brennraum des Zylinders herrühren. Dazu gehören neben Rest-Kohlenwasserstoffen (HC), die meist ebenfalls überwiegend gasförmig vorliegen, auch Partikelemissionen. Dabei handelt es sich um komplexe Agglomerate aus überwiegend Kohlenstoff-haltigen Feststoffteilchen und einer anhaftenden Flüssigphase, die meist mehrheitlich aus längerkettigen Kohlenwasserstoff-Kondensaten besteht. Die auf den festen Bestandteilen anhaftende Flüssigphase wird auch als "Soluble Organic Fraction SOF" oder "Volatile Organic Fraction VOF" bezeichnet.

Zur Reinigung dieser Abgase müssen die genannten Bestandteile möglichst vollständig in unschädliche Verbindungen umgewandelt werden, was nur unter Einsatz geeigneter Katalysatoren möglich ist.

Ein bekanntes Verfahren zur Entfernung von Stickoxiden aus Abgasen in Gegenwart von Sauerstoff ist die selektive katalytische Reduktion mittels Ammoniak an einem geeigneten Katalysator (SCR-Verfahren). Bei diesem Verfahren werden die aus dem Abgas zu entfernenden Stickoxide mit Ammoniak als Reduktionsmittel zu Stickstoff und Wasser umgesetzt.

Als wesentliche Reaktionswege der SCR-Reaktion wurden die sogenannte "Standard SCR Reaktion" nach der Gleichung (I)

$$NH_3 + NO + 1/4\ O_2 \rightarrow N_2 + 3/2\ H_2O \qquad (I)$$

sowie die sogenannte "schnelle SCR Reaktion" nach der Gleichung (II)

$$NH_3 + 1/2\ NO + 1/2\ NO_2 \rightarrow N_2 + 3/2\ H_2O \qquad (II)$$

identifiziert.

Nachdem das Abgas von mager betriebenen Verbrennungsmotoren üblicherweise $NO_2$ nur in Mengen von ca. 10% des gesamten Stickoxidanteils umfasst, wird normalerweise angestrebt, seinen Anteil zu erhöhen, um in den Genuss der schnellen SCR Reaktion zu kommen. Dies geschieht zum Beispiel mittels eines vorgeschalteten Oxidationskatalysators. Abhängig vom im konkreten Fall eingesetzten Abgassystem kann ein SCR-Katalysator aber dennoch mit ganz unterschiedlichen $NO_2$/NOx-Verhältnissen konfrontiert sein, die von einem Überschuss an NO bis zu einem Überschuss an $NO_2$ reichen können.

Der als Reduktionsmittel verwendete Ammoniak kann durch Eindosierung einer Ammoniakvorläuferverbindung, wie beispielsweise Harnstoff, Ammoniumcarbamat oder Ammoniumformiat, in den Abgasstrang und anschließende Hydrolyse verfügbar gemacht werden.

Als SCR-Katalysatoren können sogenannte Mischoxid-Katalysatoren verwendet werden, die auf Oxiden des Vanadiums basieren und die in der Regel noch Oxide des Titans und weiterer Metalle, etwa des Wolframs, enthalten (siehe Isabella Nova und Enrico Tronconi (Hrsg.), Urea-SCR Technology for deNOx After Treatment of Diesel Exhausts, Kapitel 3, Springer Verlag, 2014).

Sofern das im Abgas enthaltene Stickoxid ausschließlich oder zumindest vorwiegend in Form von NO vorliegt, zeichnen sich SCR-Katalysatoren auf Vanadiumoxid-Basis durch gute Aktivität und Stabilität aus. Allerdings weisen sie bei $NO_2$-Überschuss deutliche Aktivitätseinbußen auf. Die Zugabe von Ceroxid zu den Vanadiumoxid-basierten SCR-Katalysatoren verbessert zwar die Aktivität bei $NO_2$-Überschuss, verschlechtert aber gleichzeitig die Tieftemperaturaktivität (T < 250°C) bei NO-Überschuss.

Es besteht demnach Bedarf nach Vanadiumoxid-basierten SCR-Katalysatoren, die sowohl gute Aktivität bei $NO_2$-Überschuss, als auch bei NO-Überschuss und tiefen Temperaturen (T < 250°C) aufweisen.

Es ist bereits bekannt, in auf Metalloxid-basierten SCR-Katalysatoren auch Nioboxid einzusetzen. So offenbart etwa die US 9,555,371 einen SCR-Katalysator, der mindestens 91 Gew.-% Ceroxid und 0,1 bis 9 Gew.-% Nioboxid oder Tantaloxid enthält. Auch die WO 2012/004263 A1 beschreibt einen Katalysator, der Ceroxid und 2 bis 20 Gew.-% Nioboxid enthält. Daneben können auch Zirkonoxid und weitere Metalloxide zugegen sein. Die US 4,378,338 beschreibt einen Katalysator, der Titan, Vanadium, Magnesium und eine weitere Metallkomponente enthält, die auch Niobium sein kann. Die US 2012/308459 beschreibt einen Katalysator, der Vanadium, Wolfram und Titan, sowie eine weitere Komponente enthält, die ausgewählt ist aus Molybdän, Kobalt und Niobium.

Schließlich offenbart die WO 2011/032020 A2 einen SCR-Katalysator, der eine Trägerschicht und eine katalytische Schicht aufweist. Während die Trägerschicht beispielsweise $TiO_2$, $Al_2O_3$, $SiO_2$, $TiO_2$-$Al_2O_3$, $TiO_2$-$SiO_2$, $CeO_2$, $Al_2O_3$-$SiO_2$ oder $TiO_2$-$Al_2O_3$-$SiO_2$ enthält, kann die katalytische Schicht auch Niobium enthalten.

Es wurde nun überraschend gefunden, dass ausgehend von Vanadiumoxid-basierten SCR-Katalysatoren, die Ceroxid enthalten, das oben genannte technische Problem gelöst werden kann, wenn man dem Katalysator ein Oxid des Niobiums zugibt.

Die vorliegende Erfindung betrifft demnach einen Katalysator, der

- mindestens ein Oxid des Vanadiums,
- mindestens ein Oxid des Wolframs,
- mindestens ein Oxid des Cers,
- mindestens ein Oxid des Titans und
- mindestens ein Oxid des Niobiums

enthält.

In einer Ausführungsform des erfindungsgemäßen Katalysators enthält er zusätzlich mindestens ein Oxid des Siliziums.

In weiteren Ausführungsformen des erfindungsgemäßen Katalysators enthält er zusätzlich mindestens ein Oxid des Molybdäns, des Antimons, des Zirkoniums, des Tantals und/oder des Hafniums.

In bevorzugten Ausführungsformen des erfindungsgemäßen Katalysators enthält er mindestens ein Oxid des Cers in Mengen von 2 bis 4 Gew.-%, bezogen auf das Gewicht des Katalysators und berechnet als $CeO_2$. In weiteren bevorzugten Ausführungsformen des erfindungsgemäßen Katalysators enthält er mindestens ein Oxid des Niobiums in Mengen von 1 bis 7 Gew.-%, bezogen auf das Gewicht des Katalysators und berechnet als $Nb_2O_5$. Es sind darüber hinaus Ausführungsformen des erfindungsgemäßen Katalysators bevorzugt, die mindestens ein Oxid des Cers in Mengen von 2 bis 4 Gew.-% und berechnet als $CeO_2$, sowie mindestens ein Oxid des Niobiums in Mengen von 1 bis 7 Gew.-%, jeweils bezogen auf das Gewicht des Katalysators und berechnet als $Nb_2O_5$, enthalten.

In weiteren bevorzugten Ausführungsformen des erfindungsgemäßen Katalysators enthält er

- mindestens ein Oxid des Vanadiums in einer Menge von 2 bis 6 Gew.-%,
- mindestens ein Oxid des Wolframs in einer Menge von 0,5 bis 2 Gew.-%,
- mindestens ein Oxid des Cers in einer Menge von 2 bis 4 Gew.-%,
- mindestens ein Oxid des Niobiums in einer Menge von 1 bis 7 Gew.-% und
- mindestens ein Oxid des Titans in einer Menge, die so bemessen ist, dass insgesamt 100 Gew.-% resultieren,

jeweils bezogen auf das Gewicht des Katalysators und berechnet als $V_2O_5$, $WO_3$, $CeO_2$ bzw. $Nb_2O_5$.

Sofern der erfindungsgemäße Katalysator mindestens ein Oxid des Siliziums enthält, so ist es bevorzugt in Mengen von 2 bis 7 Gew.-%, bezogen auf das Gewicht des Katalysators und berechnet als $SiO_2$, vorhanden.

Sofern der erfindungsgemäße Katalysator mindestens ein Oxid des Molybdäns, des Antimons, des Zirkoniums, des Tantals und/oder des Hafniums umfasst, so ist die Gesamtmenge dieser Oxide bevorzugt 0,5 bis 20 Gew.-%, bezogen auf das Gewicht des Katalysators und berechnet als $MoO_3$, $Sb_2O_5$, $ZrO_2$, $Ta_2O_5$ bzw. $HfO_2$.

Der erfindungsgemäße Katalysator ist bevorzugt frei von Magnesium oder Verbindungen des Magnesiums. In Ausführungsformen ist der erfindungsgemäße Katalysator auch frei von Zirkonium bzw. Verbindungen des Zirkoniums.

Der Begriff Oxid des Vanadiums umfasst im Rahmen der vorliegenden Erfindung alle Oxide, die unter den Bedingungen der Herstellung, Lagerung und Verwendung des erfindungsgemäßen Katalysators entstehen bzw. vorliegen können. Er umfasst somit zum Beispiel $V_2O_5$, aber auch alle anderen Oxide des Vanadiums. Analog umfasst der Begriff Oxid des Wolframs zum Beispiel $WO_3$, aber auch alle anderen Oxide des Wolframs, der Begriff Oxid des Cers zum Beispiel $CeO_2$, aber auch alle anderen Oxide des Cers, der Begriff Oxid des Niobiums zum Beispiel $Nb_2O_5$, aber auch alle anderen Oxide des Niobiums, der Begriff Oxid des Titans zum Beispiel $TiO_2$, aber auch alle anderen Oxide des Titans, sowie Oxid des Siliziums zum Beispiel $SiO_2$, aber auch alle anderen Oxide des Siliziums. Ebenso verhält es sich mit den Begriffen Oxid des Molybdäns, des Antimons, des Zirkoniums, des Tantals bzw. des Hafniums.

Der erfindungsgemäße Katalysator kann in einfacher Weise hergestellt werden.

So können beispielsweise Oxide des Vanadiums, des Wolframs, des Cers, des Niobiums und des Titans und gegebenenfalls der weiteren Metalloxide in Pulverform in den gewünschten Mengen innig vermischt und anschließend kalziniert werden. Es ist aber in der Regel vorteilhaft, die genannten Oxide in Wasser aufzuschlämmen und dann zu trocknen und zu kalzinieren.

In einer Variante dieses Verfahrens wird nur ein Teil der Metalloxide als solche vorgelegt, während die übrigen Metalle in Form wasserlöslicher Metallsalze zugegeben werden. So können beispielsweise Oxide des Wolframs, Cers, Niobiums und Titans vorgelegt und dann mit der wässrigen Lösung einer wasserlöslichen Vanadiumverbindung imprägniert und nachfolgend getrocknet und kalziniert werden. Geeignete wasserlösliche Vanadiumverbindungen sind insbesondere Vanadyloxalat, das durch Auflösen von Vanadiumpentoxid in Oxalsäure erhalten werden kann (siehe zum Beispiel EP 0 345 695 A2) oder Umsetzungsprodukte von Vanadiumpentoxid mit Aminen oder Ethanolaminen (siehe zum Beispiel WO89/03366 A1 und WO2011/013006), besonders AmmoniumMetavanadat. Die DE 11 2007 000 814 T5 beschreibt auch die Verwendung von Vanadiumoxytrichlorid.

Alternativ können auch Oxide des Vanadiums, Cers, Niobiums und Titans vorgelegt und dann mit der wässrigen Lösung einer wasserlöslichen Wolframverbindung imprägniert und nachfolgend getrocknet und kalziniert werden. Eine dafür geeignete wasserlösliche Wolframverbindung ist Ammoniummetawolframat.

An Stelle der einzelnen Oxide können zwei oder mehr Metalloxide auch in Form der entsprechenden Mischoxide oder in Form von mit ein oder mehreren anderen Metalloxiden dotierten Metalloxiden verwendet werden. So kann zum Beispiel ein mit Siliziumdioxid und Wolframtrioxid dotiertes Titandioxid mit wasserlöslichen Verbindungen des Vanadiums und des Niobiums imprägniert und dann getrocknet und kalziniert werden.

Insbesondere abhängig vom Herstellungsverfahren kann der erfindungsgemäße Katalysator als Mischung von Metalloxiden, als Mischoxid, insbesondere aber in Form von Zwischenstufen zwischen Mischung von Metalloxiden und Mischoxid vorliegen. So können zum Beispiel zwei oder drei Metalle in Form eines Mischoxides vorliegen, das mit den übrigen Metallen imprägniert ist.

Die zur Herstellung des erfindungsgemäßen Katalysators nötigen Ausgangsverbindungen, wie Metalloxide, Mischoxide bzw. wasserlöslichen Metallsalze sind dem Fachmann bekannt und am Markt erhältlich.

Der erfindungsgemäße Katalysator liegt in bevorzugten Ausführungsformen als Beschichtung auf einem Tragkörper vor, der als Durchflusswabenkörper oder Wandflussfilter vorliegen kann.

In Ausführungsformen der vorliegenden Erfindung ist der Tragkörper katalytisch inert und besteht aus keramischem oder metallischem Material, beispielsweise aus Silicium-Carbid, Aluminium-Titanat oder Cordierit. Bei diesen Ausführungsformen liegen alle Bestandteile des erfindungsgemäßen Katalysators in einer Beschichtung vor.

Beschichtete Tragkörper können nach dem Fachmann geläufigen Methoden hergestellt werden, so etwa nach den üblichen Tauchbeschichtungsverfahren bzw. Pump- und Saug-Beschichtungsverfahren mit sich anschließender thermischer Nachbehandlung (Kalzination).

In anderen Ausführungsform der vorliegenden Erfindung ist der erfindungsgemäße Katalysator selbst Bestandteil des Tragkörpers, der in diesem Fall aus dem erfindungsgemäßen Katalysator, sowie einer Matrixkomponente gebildet ist.

Trägersubstrate, Durchflusssubstrate ebenso wie Wandflussfilter, die nicht nur aus inertem Material, wie beispielsweise Cordierit bestehen, sondern die daneben auch ein katalytisch aktives Material enthalten, sind dem Fachmann bekannt. Zu ihrer Herstellung wird eine Mischung aus beispielsweise 10 bis 95 Gew.-% inerter Matrixkomponente und 5 bis 90 Gew.-% katalytisch aktiven Materials nach an sich bekannten Verfahren extrudiert. Als Matrixkomponenten können dabei alle auch sonst zur Herstellung von Katalysatorsubstraten verwendeten inerten Materialien verwendet werden. Es handelt sich dabei beispielsweise um Silikate, Oxide, Nitride oder Carbide, wobei insbesondere Magnesium-Aluminium-Silikate bevorzugt sind.

Der erfindungsgemäße Katalysator eignet sich in hervorragender Weise zur Verminderung von Stickoxiden in Abgasen von mager betriebenen Verbrennungsmotoren, insbesondere Dieselmotoren.

Die vorliegende Erfindung betrifft somit auch ein Verfahren zur Verminderung von Stickoxiden in Abgasen von mager betriebenen Verbrennungsmotoren umfassend die Verfahrensschritte

- Zugabe eines Reduktionsmittels zum Stickoxide enthaltenden Abgas und
- Überleitung des resultierenden Gemisches aus Stickoxide enthaltendem Abgas und Reduktionsmittel über einen erfindungsgemäßen Katalysator.

Als Reduktionsmittel kommt insbesondere Ammoniak in Frage, wobei mit besonderem Vorteil zum Stickoxide enthaltenden Abgas nicht Ammoniak selbst, sondern ein Ammoniak-Precursor, insbesondere Harnstoff, zugegeben wird.

Insbesondere wird der erfindungsgemäße Katalysator als Bestandteil eines Abgasreinigungssystems verwendet, das beispielsweise neben dem erfindungsgemäßen Katalysator einen anströmseitig angeordneten Oxidationskatalysator und ein Dieselpartikelfilter umfasst. Dabei kann der erfindungsgemäße Katalysator auch als Beschichtung auf dem Dieselpartikelfilter vorliegen.

Die vorliegende Erfindung betrifft somit auch ein Abgasreinigungssystem zur Behandlung von Dieselabgas, das in Strömungsrichtung des Abgases

- einen Oxidationskatalysator,
- ein Dieselpartikelfilter und
- einen erfindungsgemäßen Katalysator

oder

- einen Oxidationskatalysator und

- ein Dieselpartikelfilter, auf dem ein erfindungsgemäßer Katalysator als Beschichtung vorliegt

umfasst.

Für das erfindungsgemäße Abgasreinigungssystem geeignete Oxidationskatalysatoren, insbesondere Platin, Palladium oder Platin und Palladium geträgert auf zum Beispiel Aluminiumoxid, und Dieselpartikelfilter sind dem Fachmann bekannt und am Markt erhältlich.

In der Regel umfasst das erfindungsgemäße Abgasreinigungssystem eine anströmseitig zum erfindungsgemäßen Katalysator angeordnete Vorrichtung zum Eindosieren des Reduktionsmittels.

Die Einspritzvorrichtung kann vom Fachmann beliebig gewählt werden, wobei geeignete Vorrichtungen der Literatur entnommen werden können (siehe etwa T. Mayer, Feststoff-SCR-System auf Basis von Ammoniumcarbamat, Dissertation, TU Kaiserslautern, 2005). Als Reduktionsmittel wird über die Einspritzvorrichtung insbesondere Ammoniak als solches oder in Form einer Verbindung in den Abgasstrom eingebracht, aus der bei den Umgebungsbedingungen Ammoniak gebildet wird. Als solche kommen beispielsweise wässrige Lösungen von Harnstoff oder Ammoniumformiat in Frage, ebenso wie festes Ammoniumcarbamat. In der Regel wird das Reduktionsmittel bzw. ein Vorläufer davon in einem mitgeführten Behälter, der mit der Einspritz-vorrichtung verbunden ist, vorrätig gehalten.

Die Erfindung wird nachfolgend anhand einiger Figuren und Beispiele weitergehend erläutert. Es zeigen:

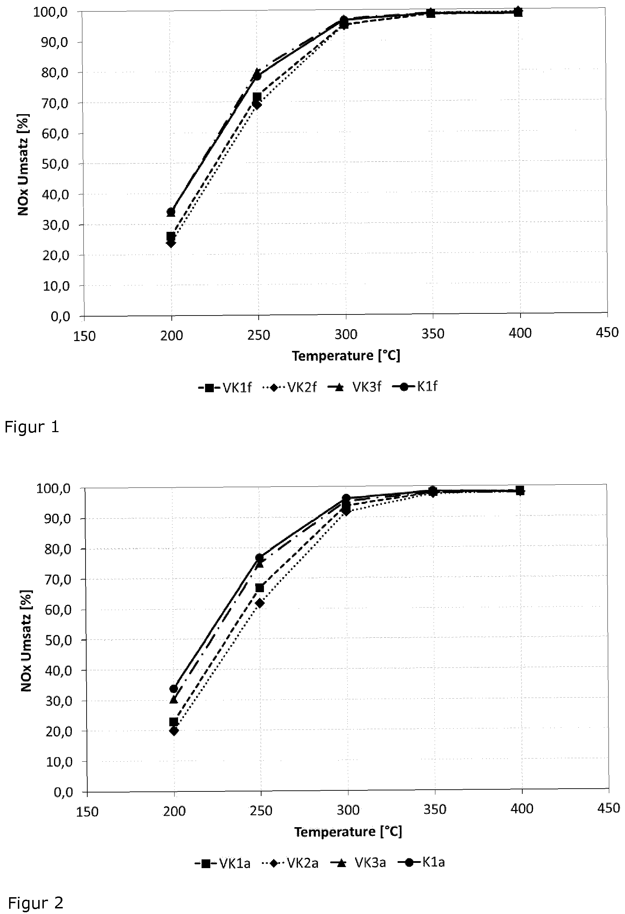

**Figur 1:**  Stickoxid-Umsätze in der dominanten SCR-Reaktion, gemessen an dem erfindungsgemäßen Katalysator K1 in Vergleich zu Vergleichskatalysatoren VK1, VK2 und VK3 in frischem Zustand (K1f, VK1f, VK2f, VK3f).

**Figur 2:**  Stickoxid-Umsätze in der dominanten SCR-Reaktion, gemessen an dem erfindungsgemäßen Katalysator K1 in Vergleich zu Vergleichskatalysatoren VK1, VK2 und VK3 in gealtertem Zustand (K1a, VK1a, VK2a, VK3a).

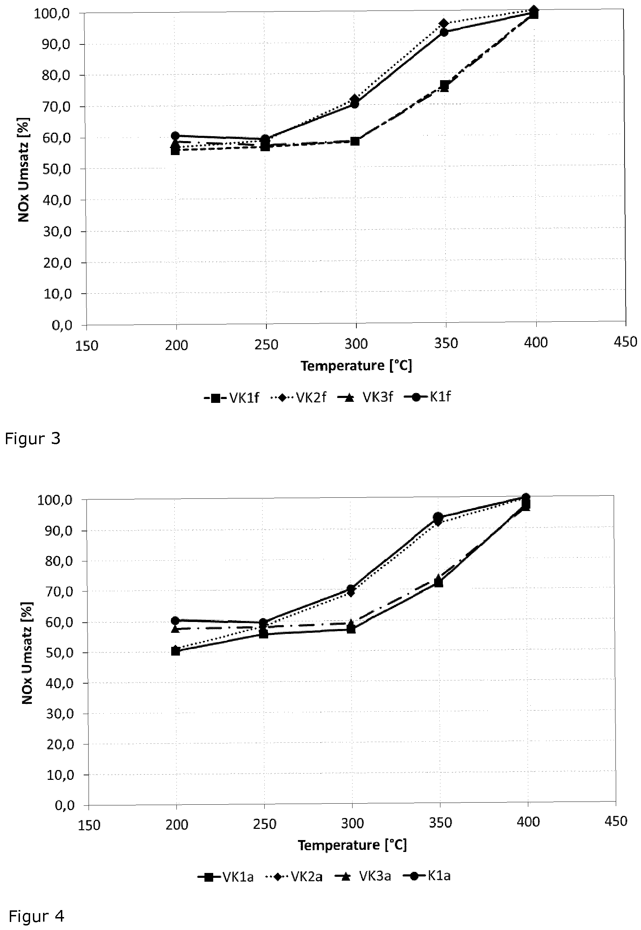

**Figur 3:**  Stickoxid-Umsätze in der schnellen SCR-Reaktion, gemessen an dem erfindungsgemäßen Katalysator K1 in Vergleich zu Vergleichskatalysatoren VK1, VK2 und VK3 in frischem Zustand (K1f, VK1f, VK2f, VK3f).

**Figur 4:**  Stickoxid-Umsätze in der schnellen SCR-Reaktion, gemessen an dem erfindungsgemäßen Katalysator K1 in Vergleich zu Vergleichskatalysatoren VK1, VK2 und VK3 in gealtertem Zustand (K1a, VK1a, VK2a, VK3a).

Beispiel 1

a) Ein kommerziell erhältliches mit 5 Gew.-% Siliziumdioxid dotiertes Titandioxid in der Anatasform wurde im Wasser dispergiert und sodann Vanadiumdioxid ($VO_2$), Wolframtrioxid ($WO_3$), Cerdioxid ($CeO_2$) und Ammoniumnioboxalat in Mengen zugefügt, dass eine Katalysator der Zusammensetzung 81,70 Gew.-% $TiO_2$, 4,30 Gew.-% $SiO_2$, 3,00 Gew.-% $V_2O_5$, 3,00 Gew.-% $WO_3$, 3,00 Gew.-% $CeO_2$ und 5,00 Gew.-% $Nb_2O_5$ resultiert. Die Mischung wurde intensiv gerührt und schließlich in einer handelsüblichen Rührwerkskugelmühle gemahlen.

b) Die nach a) erhaltene Dispersion wurde in üblicher Weise auf ein handelsübliches keramisches Durchflusssubstrat mit einem Volumen von 0,5 L und einer Zellzahl von 62 Zellen pro Quadratzentimeter bei einer Wandstärke von 0,17 mm auf dessen gesamter Länge mit einer Washcoat-Beladung von 160 g/L beschichtet. Sodann wurde bei 90°C getrocknet und bei 600°C für 2 Stunden kalziniert. Der so erhaltene Katalysator K1 liegt in frischem Zustand vor und wird deshalb nachfolgend mit K1f bezeichnet.

c) Der nach b) erhaltene Katalysator K1 wurde für 100 Stunden bei 550°C in einer Gasatmosphäre (10% $O_2$, 10% $H_2O$, Rest $N_2$) einer hydrothermalen Alterung unterworfen. Der Katalysator K1 liegt dann in gealtertem Zustand vor und wird nachstehend als K1a bezeichnet.

Vergleichsbeispiel 1

a) Ein kommerziell erhältliches mit 5 Gew.-% Siliziumdioxid dotiertes Titandioxid in der Anatasform wurde im Wasser dispergiert und sodann Vanadiumdioxid ($VO_2$) und Wolframtrioxid ($WO_3$) in Mengen zugefügt, dass ein Katalysator der Zusammensetzung 88,10 Gew.-% $TiO_2$, 4,60 Gew.-% $SiO_2$, 3,00 Gew.-% $V_2O_5$, 4,30 Gew.-% $WO_3$ resultiert. Die Mischung wurde intensiv gerührt und schließlich in einer handelsüblichen Rührwerkskugelmühle gerührt.

b) Die nach a) erhaltene Dispersion wurde in üblicher Weise auf ein handelsübliches keramisches Durchflusssubstrat mit einem Volumen von 0,5 L und einer Zellzahl von 62 Zellen pro Quadratzentimeter bei einer Wandstärke von 0,17 mm auf dessen gesamter Länge mit einer Washcoat-Beladung von 160 g/L beschichtet. Sodann wurde bei 90°C getrocknet und bei 600°C für 2 Stunden kalziniert. Der so erhaltene Katalysator VK1 liegt in frischem Zustand vor und wird deshalb nachfolgend mit VK1f bezeichnet.

c) Der nach b) erhaltene VK1a wurde für 100 Stunden bei 550°C in einer Gasatmosphäre (10% $O_2$, 10% $H_2O$, Rest $N_2$) einer hydrothermalen Alterung unterworfen. Der Katalysator VK1 liegt dann in gealtertem Zustand vor und wird nachstehend als VK1a bezeichnet.

Vergleichsbeispiel 2

a) Ein kommerziell erhältliches mit 5 Gew.-% Siliziumdioxid dotiertes Titandioxid in der Anatasform wurde im Wasser dispergiert und sodann Vanadiumdioxid ($VO_2$), Wolframtrioxid ($WO_3$) und Cerdioxid ($CeO_2$) in Mengen zugefügt, dass ein Katalysator der Zusammensetzung 86,20 Gew.-% $TiO_2$, 4,50 Gew.-% $SiO_2$, 3,00 Gew.-% $V_2O_5$, 4,30 Gew.-% $WO_3$ und 2,00 Gew.-% $CeO_2$ resultiert. Die Mischung wurde intensiv gerührt und schließlich in einer handelsüblichen Rührwerkskugelmühle gerührt.

b) Die nach a) erhaltene Dispersion wurde in üblicher Weise auf ein handelsübliches keramisches Durchflusssubstrat mit einem Volumen von 0,5 L und einer Zellzahl von 62 Zellen pro Quadratzentimeter bei einer Wandstärke von 0,17 mm auf dessen gesamter Länge mit einer Washcoat-Beladung von 160 g/L beschichtet. Sodann wurde bei 90°C getrocknet und bei 600°C für 2 Stunden kalziniert. Der so erhaltene Katalysator VK2 liegt in frischem Zustand vor und wird deshalb nachfolgend mit VK2f bezeichnet.

c) Der nach b) erhaltene VK2a wurde für 100 Stunden bei 550°C in einer Gasatmosphäre (10% $O_2$, 10% $H_2O$, Rest $N_2$) einer hydrothermalen Alterung unterworfen. Der Katalysator VK2 liegt dann in gealtertem Zustand vor und wird nachstehend als VK2a bezeichnet.

Vergleichsbeispiel 3

a) Ein kommerziell erhältliches mit 5 Gew.-% Siliziumdioxid dotiertes Titandioxid in der Anatasform wurde im Wasser dispergiert und sodann Vanadiumdioxid ($VO_2$), Wolframtrioxid ($WO_3$) und Ammoniumnioboxalat in Mengen zugefügt, dass eine Katalysator der Zusammensetzung 86,20 Gew.-% $TiO_2$, 4,50 Gew.-% $SiO_2$, 3,00 Gew.-% $V_2O_5$, 4,30 Gew.-% $WO_3$ und 2,00 Gew.-% $Nb_2O_5$ resultiert. Die Mischung wurde intensiv gerührt und schließlich in einer handelsüblichen Rührwerkskugelmühle gemahlen.

b) Die nach a) erhaltene Dispersion wurde in üblicher Weise auf ein handelsübliches keramisches Durchflusssubstrat mit einem Volumen von 0,5 L und einer Zellzahl von 62 Zellen pro Quadratzentimeter bei einer Wandstärke von 0,17 mm auf dessen gesamter Länge mit einer Washcoat-Beladung von 160 g/L beschichtet. Sodann wurde bei 90°C getrocknet und bei 600°C für 2 Stunden kalziniert. Der so erhaltene Katalysator VK3 liegt in frischem Zustand vor und wird deshalb nachfolgend mit VK3f bezeichnet.

c) Der nach b) erhaltene VK3a wurde für 100 Stunden bei 550°C in einer Gasatmosphäre (10% $O_2$, 10% $H_2O$, Rest $N_2$) einer hydrothermalen Alterung unterworfen. Der Katalysator VK3 liegt dann in gealtertem Zustand vor und wird nachstehend als VK3a bezeichnet.

Untersuchung des Stickoxid-Umsatzes als Maß für die SCR-Aktivität: Die Bestimmung der NO-Umsätze der nach den vorstehend beschriebenen Beispielen und Vergleichsbeispielen hergestellten Katalysatoren bzw. Vergleichskatalysatoren erfolgte in einem Reaktor aus Quarzglas. Dazu wurden Bohrkerne mit L = 3" und D = 1" zwischen 200 und 400°C unter Stationärbedingungen getestet. Die Testung erfolgte in einer Labor-Modellgasanlage unter den folgenden Bedingungen.

| Zusammensetzung des Modellgases | | |
|---|---|---|
| | Standard SCR Reaktion | Schnelle SCR Reaktion |
| $NO_x$ [Vol.-ppm]: | 1000 | 1000 |
| $NO_2/NO_x$ [%] | 0 | 75 |
| NH3 [Vol.-ppm]: | 1100 | 1350 |
| $O_2$ [Vol.-%]: | 10 | 10 |
| H2O [Vol.-%] | 5 | 5 |
| N2: | Rest | Rest |

(fortgesetzt)

| Allgemeine Testbedingungen | |
|---|---|
| Raumgeschwindigkeit [h$^{-1}$]: | 60,000 |
| Temperatur [°C]: | 200; 250; 300; 350; 400 |
| Konditionierung vor Meßbeginn: | Modellgas-Atmosphäre; 600°C; einige Minuten |

Während der Messung wurden die Stickoxid-Konzentrationen des Modellgases nach Katalysator mit einer geeigneten Analytik erfasst. Aus den bekannten, dosierten Stickoxid-Gehalten, die während der Konditionierung zu Beginn des jeweiligen Prüflaufs mit einer Vor-Katalysator-Abgasanalytik verifiziert wurden, und den gemessenen Stickoxid-Gehalten nach Katalysator wurde der Stickoxid-Umsatz, bezogen auf das Verhältnis von NH$_3$ zu NO, über dem Katalysator für jeden Temperaturmesspunkt wie folgt berechnet:

$$U_{NO_x}[\%] \quad = \quad \left(1 - \frac{c_{Ausgang}(NO_x)}{c_{Eingang}(NO_x)}\right) \times 100$$

mit

$$c_{Eingang/Ausgang}(NO_x) = c_{Eingang/Ausgang}(NO) + c_{Eingang/Ausgang}(NO_2) + c_{Eingang/Ausgang}(N_2O)$$

Die erhaltenen Stickoxid-Umsatz-Werte $U_{NOx}$ [%] wurden zur Beurteilung der SCR-Aktivität der untersuchten Materialien als Funktion der vor Katalysator gemessenen Temperatur aufgetragen.

**Patentansprüche**

1. Katalysator, der

   • mindestens ein Oxid des Vanadiums,
   • mindestens ein Oxid des Wolframs,
   • mindestens ein Oxid des Cers,
   • mindestens ein Oxid des Titans und
   • mindestens ein Oxid des Niobiums

   enthält.

2. Katalysator gemäß Anspruch 1, **dadurch gekennzeichnet, dass** er mindestens ein Oxid des Siliziums enthält.

3. Katalysator gemäß Anspruch 1 und/oder 2, **dadurch gekennzeichnet, dass** er mindestens ein Oxid des Molybdäns, des Antimons, des Zirkoniums, des Tantals und/oder des Hafniums enthält.

4. Katalysator gemäß einem oder mehreren der Ansprüche 1 bis 3, **dadurch gekennzeichnet, dass** er mindestens ein Oxid des Cers in Mengen von 2 bis 4 Gew.-%, bezogen auf das Gewicht des Katalysators und berechnet als CeO$_2$ enthält.

5. Katalysator gemäß einem oder mehreren der Ansprüche 1 bis 4, **dadurch gekennzeichnet, dass** er mindestens ein Oxid des Niobiums in Mengen von 1 bis 7 Gew.-%, bezogen auf das Gewicht des Katalysators und berechnet als Nb$_2$O$_5$ enthält.

6. Katalysator gemäß einem oder mehreren der Ansprüche 1 bis 5, **dadurch gekennzeichnet, dass** er

   • mindestens ein Oxid des Vanadiums in einer Menge von 2 bis 6 Gew.-%,
   • mindestens ein Oxid des Wolframs in einer Menge von 0,5 bis 2 Gew.-%,

- mindestens ein Oxid des Cers in einer Menge von 2 bis 4 Gew.-%,
- mindestens ein Oxid des Niobiums in einer Menge von 1 bis 7 Gew.-% und
- mindestens ein Oxid des Titans in einer Menge, die so bemessen ist, dass insgesamt 100 Gew.-% resultieren,

enthält, jeweils bezogen auf das Gewicht des Katalysators und berechnet als $V_2O_5$, $WO_3$, $CeO_2$ bzw. $Nb_2O_5$.

7. Katalysator gemäß einem oder mehreren der Ansprüche 1 bis 6, **dadurch gekennzeichnet, dass** er mindestens ein Oxid des Siliziums in Mengen von 2 bis 7 Gew.-%, bezogen auf das Gewicht des Katalysators und berechnet als $SiO_2$, enthält.

8. Katalysator gemäß einem oder mehreren der Ansprüche 1 bis 7, **dadurch gekennzeichnet, dass** er mindestens ein Oxid des Molybdäns, des Antimons, des Zirkoniums, des Tantals und/oder des Hafniums in einer Gesamtmenge dieser Oxide von 0,5 bis 20 Gew.-%, bezogen auf das Gewicht des Katalysators und berechnet als $MoO_3$, $Sb_2O_5$, $ZrO_2$, $Ta_2O_5$ bzw. $HfO_2$, enthält.

9. Katalysator gemäß einem oder mehreren der Ansprüche 1 bis 8, **dadurch gekennzeichnet, dass** er als Beschichtung auf einem Tragkörper vorliegt.

10. Katalysator gemäß einem oder mehreren der Ansprüche 1 bis 8, **dadurch gekennzeichnet, dass** er als Bestandteil eines Tragkörpers vorliegt.

11. Verfahren zur Verminderung von Stickoxiden in Abgasen von mager betriebenen Verbrennungsmotoren umfassend die Verfahrensschritte

- Zugabe eines Reduktionsmittels zum Stickoxide enthaltenden Abgas und
- Überleitung des resultierenden Gemisches aus Stickoxide enthaltendem Abgas und Reduktionsmittel über einen Katalysator gemäß einem oder mehreren der Ansprüche 1 bis 10.

12. Abgasreinigungssystem zur Behandlung von Dieselabgas, das

- einen Oxidationskatalysator,
- ein Dieselpartikelfilter und
- einen Katalysator gemäß einem oder mehreren der Ansprüche 1 bis 10 oder
- einen Oxidationskatalysator und
- ein Dieselpartikelfilter, auf dem ein Katalysator gemäß einem oder mehreren der Ansprüche 1 bis 9 als Beschichtung vorliegt

umfasst.

Figur 1

Figur 2

Figur 3

Figur 4

**Europäisches Patentamt**
**European Patent Office**
**Office européen des brevets**

# EUROPÄISCHER RECHERCHENBERICHT

Nummer der Anmeldung

EP 17 20 1482

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2004 290753 A (MITSUBISHI CHEM ENG CORP) 21. Oktober 2004 (2004-10-21)<br>* das ganze Dokument *<br>* Absätze [0006], [0-11], [0027] *<br>* Beispiele 4,20 *<br>* Ansprüche *<br>* Tabelle 1 *<br>----- | 1-12 | INV.<br>B01J21/00<br>B01J21/06<br>B01J23/20<br>B01J23/30<br>B01J23/10<br>B01J23/00<br>B01D53/56<br>F01N3/20<br>B01J21/08<br>F01N3/28 |
| X | EP 2 875 863 A1 (UMICORE AG & CO KG [DE]) 27. Mai 2015 (2015-05-27)<br>* das ganze Dokument *<br>* Absätze [0065], [0108] *<br>* Katalysator L;<br>Absatz [0101] *<br>* Katalysator O;<br>Absatz [0104] *<br>* Ansprüche *<br>----- | 1-12 | |
| X | US 2012/308459 A1 (GUO XIAOYU [US]) 6. Dezember 2012 (2012-12-06)<br>* das ganze Dokument *<br>* Absätze [0074] - [0077] *<br>* Anspruch 1 *<br>----- | 1-12 | |
| X<br>A | EP 2 700 447 A1 (ASAHI KASEI CHEMICALS CORP [JP]) 26. Februar 2014 (2014-02-26)<br>* das ganze Dokument *<br>* Beispiel 5 *<br>----- | 1-3<br>4-6 | |

**RECHERCHIERTE SACHGEBIETE (IPC)**

B01J
B01D
F01N

Der vorliegende Recherchenbericht wurde für alle Patentansprüche erstellt

| Recherchenort | Abschlußdatum der Recherche | Prüfer |
|---|---|---|
| München | 18. April 2018 | Gosselin, Daniel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 20 1482

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-04-2018

| Im Recherchenbericht angeführtes Patentdokument | Datum der Veröffentlichung | Mitglied(er) der Patentfamilie | Datum der Veröffentlichung |
|---|---|---|---|
| JP 2004290753 A | 21-10-2004 | KEINE | |
| EP 2875863 A1 | 27-05-2015 | CN 105636690 A | 01-06-2016 |
| | | EP 2875863 A1 | 27-05-2015 |
| | | EP 3074126 A1 | 05-10-2016 |
| | | JP 2017503632 A | 02-02-2017 |
| | | KR 20160091394 A | 02-08-2016 |
| | | RU 2016125301 A | 09-01-2018 |
| | | US 2016288094 A1 | 06-10-2016 |
| | | WO 2015075083 A1 | 28-05-2015 |
| US 2012308459 A1 | 06-12-2012 | AR 086601 A1 | 08-01-2014 |
| | | BR 112013030893 A2 | 21-03-2017 |
| | | CA 2837344 A1 | 06-12-2012 |
| | | CN 103619467 A | 05-03-2014 |
| | | CO 6811877 A2 | 16-12-2013 |
| | | EP 2714262 A1 | 09-04-2014 |
| | | JP 2014522305 A | 04-09-2014 |
| | | KR 20140033069 A | 17-03-2014 |
| | | NZ 618395 A | 27-05-2016 |
| | | RU 2013151831 A | 10-07-2015 |
| | | TW 201311349 A | 16-03-2013 |
| | | US 2012308459 A1 | 06-12-2012 |
| | | US 2016038920 A1 | 11-02-2016 |
| | | WO 2012166543 A1 | 06-12-2012 |
| | | ZA 201308660 B | 30-07-2014 |
| EP 2700447 A1 | 26-02-2014 | CN 103476491 A | 25-12-2013 |
| | | EP 2700447 A1 | 26-02-2014 |
| | | JP 5710749 B2 | 30-04-2015 |
| | | JP WO2012144369 A1 | 28-07-2014 |
| | | KR 20130133866 A | 09-12-2013 |
| | | MY 162465 A | 15-06-2017 |
| | | RU 2013146523 A | 27-05-2015 |
| | | TW 201247314 A | 01-12-2012 |
| | | US 2014194642 A1 | 10-07-2014 |
| | | WO 2012144369 A1 | 26-10-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9555371 B
- WO 2012004263 A1
- US 4378338 A
- US 2012308459 A
- WO 2011032020 A2
- EP 0345695 A2
- WO 8903366 A1
- WO 2011013006 A
- DE 112007000814 T5